# EUROPEAN PATENT SPECIFICATION

(11) **EP 4 092 006 B1**
(45) Date of publication and mention of the grant of the patent: **29.04.2026**
(21) Application number: 22174370.1
(22) Date of filing: 19.05.2022
(51) Int. Cl.: C04B 28/04, C04B 38/10, C04B 40/00

(54) **METHOD FOR PREPARING A MINERAL FOAM, MINERAL FOAM AND USE THEREOF**
VERFAHREN ZUR HERSTELLUNG EINES MINERALSCHAUMS, MINERALSCHAUM UND SEINER VERWENDUNG
PROCEDE DE PREPARATION D'UNE MOUSSE MINERALE, MOUSSE MINERALE ET SON UTILISATION

(30) Priority: 20.05.2021 IT 202100013175
(43) Date of publication of application: 23.11.2022
(73) Proprietor: Isoltech S.r.l., 24040 Verdellino (BG) (IT)
(72) Inventor: BELLOTTI, Andrea, 24020 Ranica (BG) (IT)
(74) Representative: Rossi, Ugo

(56) References cited:
- WO-A1-2008/130107
- WO-A1-2018/162381
- CN-A- 106 866 021
- IT-A1- MI20 110 349
- US-B2- 10 214 452
- URS T. GONZENBACH ET AL: "Stabilization of Foams with Inorganic Colloidal Particles", LANGMUIR, vol. 22, no. 26, 1 December 2006 (2006-12-01), US, pages 10983 - 10988, XP055399683, ISSN: 0743-7463, DOI: 10.1021/la061825a

## Description

### Field of the invention

The present invention relates to a method for preparing a mineral foam, the mineral foam obtained and the use thereof.

### Background of the Invention

As is well known, different types of materials are widely used in the building sector to achieve thermal and acoustic insulation of buildings. The most commonly used insulation materials include moulded polystyrene, extruded polystyrene, expanded polyurethane, rock wool, glass wool and other materials, less widely used materials such as cork and wood fiber.

These materials can be introduced into the cavity of hollow-core walls at the time of their construction or after the construction of the walls by means of suitable insulating materials in a fluid state. For walls other than hollow-core walls, thermal insulation from the outside is generally used by means of the technique known as "a cappotto", i.e. by cladding the walls externally with prefabricated sheets of insulating material. Where it is not possible or cost-effective to thermally insulate the building from the outside, it can be done by applying insulation materials to the interior surfaces of the building, achieving satisfactory results, but with the drawback that the available interior space is proportionally reduced.

Each of the aforementioned materials, although satisfactory in terms of thermal and/or acoustic insulation performance, has various drawbacks. For example, polystyrene is neither fire-resistant nor vapour-permeable; moreover, being a material made from petroleum-derived raw materials, it has a high environmental impact and is not recyclable. Polyurethane is also made from petroleum-based raw materials and is neither recyclable nor breathable. Rock wool and glass wool, on the other hand, have poor moisture resistance, little stability over time, low consistency and are not recyclable. As for cork, it has the disadvantage of having poor fire resistance and being limited in nature.

The use of inorganic materials based on Portland cement, lime and silica, such as autoclaved aerated concrete (e.g. Gasbeton^{®}), is also well known in the state of the art, both as thermal and acoustic insulation and as building materials. These materials have a cellular structure, low density and relatively high mechanical performance. Due to their chemical composition, they are more environmentally friendly than organic insulation materials and are not flammable.

Autoclaved aerated concrete is obtained by the reaction at a temperature of approximately 200°C between lime and silica in an autoclave. The expansion that forms the cellular structure, on the other hand, is obtained by a chemical reaction between aluminium powder and lime. Autoclaved aerated concretes, however, present environmental sustainability problems mainly related to the use of autoclaves, which are known to generate considerable amounts of carbon dioxide (CO₂) that are released into the atmosphere, and consume a lot of energy that is generally produced from fossil fuels.

Also known is pre-formed foam cellular concrete, which is obtained by mixing a cement slurry with a pre-formed foam. However, as this material is not steam-treated in an autoclave, it exhibits high shrinkage and moderate mechanical resistance.

Known from WO 2018/162381 A1 is a method for preparing a calcium sulfoaluminate foam stabilized by means of hydrophobic inorganic particles. Also known from WO 2008/130107 A1 is a method for preparing a rapid set foam comprising the steps of preparing an aqueous foam solution, preparing a cement slurry, mixing it with the foam, adding an accelerating agent (colloidal silica), molding and setting.

### Summary of the invention

In view of the aforementioned state of the art, the Applicant's primary objective is to provide a mineral foam with lower environmental impact than organic and inorganic materials of the known art.

In particular, a specific purpose of the present invention is to provide an environmentally friendly mineral foam that, when cured, forms a cellular material that possesses adequate thermal and/or acoustic insulation properties, high mechanical performance, light weight, fire resistance, moisture breathability and is recyclable.

Another purpose of the present invention is to provide a mineral foam that, in its wet state, has sufficient consistency and stability to allow it to be poured into cavities or moulds (e.g. to produce construction elements) and subsequently hardened without the cell structure collapsing.

A further purpose of the present invention is to provide a method for preparing an environmentally friendly mineral foam that is also low in energy consumption.

The Applicant has now found that the aforementioned and other purposes, which will be better illustrated in the following description, can be achieved by a mineral foam employing a mixture of natural inorganic binders as a partial substitute for Portland cement and wherein said mixture of inorganic binders comprises at least one reactive aluminosilicate binder, at least one hydraulic binder and at least one aerial binder (i.e., non-hydraulic binder); the mineral foam also contains colloidal silica, which, in addition to having a stabilising effect on the wet mineral foam, is structurally incorporated into the hardened cellular material.

Inorganic binders and the reactive aluminosilicate binder are either natural binders or recycled materials; they therefore have a reduced environmental impact compared to Portland cement. In particular, the presence in the mineral foam formulation of at least one reactive aluminosilicate binder (e.g. metakaolin) in combination with colloidal silica leads to the formation of an aluminosilicate phase with mechanical strength properties comparable to those of cement-only products. Colloidal silica also effectively stabilises the wet mineral foam due to the nanometric size of its particles, promoting its smooth hardening and the formation of a cellular material with a uniform porous structure.

The hardened cellular material has excellent thermal and acoustic insulation properties due to the high volume of air incorporated in its pores. It also has good mechanical performance and low density.

The specific chemical composition of mineral foam also gives the material fire resistance, moisture breathability and recyclability at the end of its life, as it can be recovered, for example, as inorganic filler material in the construction of new buildings or in other production cycles.

The mineral foam preparation method involves the separate preparation of a slurry containing the formulation ingredients and a water-based pre-formed foam; the slurry and pre-formed foam are combined together to form the wet mineral foam. The pH of the slurry, before being combined with the pre-formed foam, is suitably lowered from its original value (approx. 13-14) to a value in the range of 9 - 12.5, e.g. by adding an acid. In fact, it has been found that lowering the pH causes an increase in the temperature and viscosity of the slurry, which promotes the incorporation of the pre-formed foam into the slurry and the formation of a consistent and stable wet mineral foam. The wet mineral foam is sufficiently fluid to be poured into a cavity or mould and its consistency is such that it does not collapse during the subsequent curing phase.

In accordance with a first aspect, therefore, the present invention relates to a method for preparing a mineral foam comprising the following sequential steps:
a. preparing a slurry comprising:
   - a mixture of inorganic binders comprising: at least one reactive aluminosilicate binder, at least one hydraulic binder and at least one aerial binder;
   - Portland cement;
   - colloidal silica;
   - water;
   - optionally, at least one additive;
b. adjusting the pH of the slurry to a value within the range of 9 to 12.5;
c. combining the slurry with a pre-formed foam to obtain the mineral foam.

In accordance with a second aspect, the invention concerns a mineral foam comprising:
- a mixture of inorganic binders comprising: at least one reactive aluminosilicate, at least one hydraulic binder and at least one aerial binder;
- Portland cement,
- colloidal silica;
- water;
- optionally, at least one additive;

- a pre-formed foam.

In accordance with a third aspect, the invention concerns a cellular material obtained by curing the aforementioned mineral foam.

In accordance with a fourth aspect, the invention relates to the use of the aforementioned cellular material as a thermal insulating material, sound absorbing material or building material.

Further features are provided for in the attached claims 1 - 14.

### Detailed description of the invention

For the purposes of this description, the terms "mineral foam" and "wet mineral foam" refer to the material in the form of a fluid foam obtained by mixing a slurry of water, Portland cement and inorganic binders with a pre-formed foam. The mineral foam is thus a three-phase system consisting of a solid phase, a liquid phase and a gas phase, where the gas phase is present in the form of fine gas bubbles evenly distributed in the mineral foam. The wet mineral foam changes from a fluid to a hardened state after curing. The hardened, and optionally dried, mineral foam is hereafter also referred to as "cellular material".

In accordance with the present invention, the mineral foam comprises a mixture of inorganic binders (other than Portland cement) comprising at least one reactive aluminosilicate binder, at least one hydraulic binder and at least one aerial binder.

In principle, Portland cement can be selected from common cements made from Portland cement clinker. In a preferred embodiment, Portland cement is a cement of normalised strength 52.5 (N).

The reactive aluminosilicate binder is a geopolymeric binder, i.e. an aluminosilicate material capable of reacting with silicate species in concentrated aqueous solutions and under strongly basic pH conditions (pH ≥ 10), with the formation of a predominantly amorphous aluminosilicate solid phase.

Preferably, the aforesaid reactive aluminosilicate is selected from calcined clay (e.g. metakaolin), fly ash, blast furnace slag and mixtures thereof. Advantageously, said at least one reactive aluminosilicate is a calcined clay, preferably metakaolin. Metakaolin is obtained by calcination of natural clays at a temperature of approx. 800°C.

Preferably, the hydraulic binder is at least one binder selected from: hydraulic lime, aluminous cement, sulfo-aluminous cement, silica fume, anhydrite and mixtures thereof.

Preferably, the aerial binder is at least one binder selected from among: gypsum, hydrated lime and mixtures thereof.

In a preferred embodiment, the mixture of inorganic binders comprises: hydrated lime, at least one between aluminous cement and sulfo-aluminous cement, silica fume, and at least one between gypsum and anhydrite.

Aluminous and sulfo-aluminous cements are known to have a reduced environmental impact compared to Portland cement, as they are obtained by calcination at a lower temperature than Portland cement clinker calcination. These cements also confer faster hardening speeds when used in a mixture with Portland cement.

The colloidal silica used for the purposes of the present invention is a basic aqueous suspension of colloidal silica nanoparticles. The average particle size, measured by Dynamic Light Scattering (DLS), is in the range of 10 - 100 nm *(Z-average diameter).* Generally, the silica content in the suspension is in the range of 30% - 60% by weight, preferably approx. 40% by weight, with respect to the weight of the suspension.

Examples of commercially available aqueous silica suspensions are the products of the Levasil (Nouryon) and Ludox (Grace) series, in particular Ludox TM-50 and Ludox HS-40.

The mineral foam may comprise one or more additives. The additives may include, for example, fillers, rheology modifiers, colouring agents, hydrophobizing agents, superplasticizers, accelerators, retardants, surfactants, catalysts and mixtures thereof.

Preferably, in order to limit the amount of water required to hydrate the binders and the curing time of the mineral foam, the formulation comprises at least one superplasticizer. The superplasticizers are selected, for example, from compounds based on naphthalenesulfonates, lignin sulfonates, sulfonated melamine, polycarboxylate polymer compounds and gluconate compounds.

Preferably, the mineral foam also comprises a hydrophobizing agent to counteract moisture absorption. Preferably, the hydrophobizing agent is a silicone powder product (e.g. SITREN 750 and SITREN 730 from Evonik Nutrition & Care GmbH), calcium stearate (e.g. produced by Faci S.p.A.) or a mixture thereof.

To modulate the rheological characteristics of the mineral foam, one or more viscosifying agents can be used. Examples of viscosifying agents are: products based on wheat starch, tapioca, rice, corn or starch powders such as corn starch, potato starch and mixtures thereof. Commercially available viscosifying agents are for example Berolan ST 800, STQX1, ST801, or ST1250 from Berolan GmbH (Austria).

The mineral foam may also comprise fibers with a mechanical reinforcement and/or stabilizing function. The fibers may be made of different materials. Preferably, the fibers are of natural origin, such as basalt fibers and cellulose fibers.

Preferably, the fibers are present in an amount in the range of 0.5 kg/m³ to 5 kg/m³ by weight, more preferably 1 to 2 kg/m³, with respect to the apparent volume of the mineral foam.

The mineral foam may also comprise coloring agents to impart a desired colour to the final cellular material, such as metal oxides, especially iron oxides.

The preparation of mineral foam involves the preparation of a slurry comprising water, Portland cement, the mixture of inorganic binders and optionally additives.

For this purpose, preferably, Portland cement, reactive aluminosilicate, the mixture inorganic binders and optionally powder additives are mixed together to form a mineral powder mixture.

Preferably, Portland cement is present in an amount in the range of 5% to 80% by weight, more preferably 30% to 75% by weight, with respect to the weight of the mixture of inorganic binders.

Preferably, reactive aluminosilicate is present in an amount in the range of 20% to 80% by weight, more preferably 30% to 70% by weight, with respect to the weight of the mixture of inorganic binders.

Preferably the hydraulic binder is present in a percentage of 3% to 50% by weight, more preferably 10% to 40% by weight with respect to the mixture of inorganic binders.

Preferably, the aerial binder is present in an overall amount in the range of 5% to 60% by weight, more preferably 10% to 50% by weight, relative to the weight of the mixture of inorganic binders.

In a preferred embodiment, the mineral mixture comprises:
a. 100 parts by weight of a mixture of inorganic binders comprising:
   - 30-70% by weight of reactive aluminosilicate binder,
   - 10-40% by weight of hydraulic binder,
   - 10-50% by weight of aerial binder,
   - optionally, one or more additives,
   said percentages referring to the weight of the mixture of inorganic binders;
b. 30 to 75 parts by weight of Portland cement.

Preferably, additives are present in an amount of up to 25% by weight, more preferably 0.5% to 20% by weight, with respect to the total weight of the mixture of inorganic binders.

In a preferred embodiment of the present invention, a mixture of inorganic binders is prepared that contains all the solid ingredients of the formulation (including the reactive aluminosilicate binder) with the exception of Portland cement. In such a case, Portland cement is added to the aforementioned mixture of inorganic binders and additives to form the mineral mixture only at the time of preparing the slurry. The provision of a powder formulation without Portland cement has the advantage of allowing the packaging and distribution of a lighter and less bulky ready-to-use product, thus reducing the environmental impact of the product. This eliminates the environmental impact generated by transporting Portland cement to the place where the mineral foam is used, as Portland cement is an easily available component.

The slurry is prepared by mixing the mineral mixture with water (slurry water) at room temperature. Sufficient slurry water is added to achieve hydration of the Portland cement and other inorganic binders. Preferably, the weight ratio of the slurry water to the mineral mixture is in the range 25-60%, more preferably in the range 30-40%.

Preferably, colloidal silica is added to the mineral foam formulation by diluting it in the slurry water. Preferably, colloidal silica is present in the range of 0.5 to 10 kg of silica per m³ of mineral foam (apparent volume), more preferably 1 to 5 kg/m³.

Any additives that are in liquid form under the conditions of use are preferably also added to the slurry water.

The slurry water can either be at room temperature or a temperature in the range of 20-30°C.

Following the addition of water and the start of the hydration reactions of the inorganic binders, the pH of the slurry reaches a basic value, generally greater than or equal to 13. The attainment of the aforementioned pH is accompanied by an increase in the viscosity of the slurry, most likely due to reactions involving the reactive aluminosilicate. The pH of the slurry is then adjusted to a value in the range of 9 - 12.5, preferably in the range of 9.5 - 12. The pH can be adjusted within the aforesaid range by adding an effective amount of a pH modifying compound, preferably an acid. The acid can be chosen, for example, from acetic acid, formic acid, oxalic acid and mixtures thereof. Preferably, the acid used is acetic acid. The lowering of the pH to values in the range of 9 - 12.5 is accompanied by an increase in the temperature of the slurry (to about 30°C) and a stabilization of its viscosity.

The resulting slurry is then mixed with the pre-formed foam. The pre-formed foam is prepared separately, e.g. by mixing water and at least one foaming agent and incorporating air or other suitable gas into the mixture.

The foaming agent may comprise, for example, a surfactant chosen from: sodium lauryl sulphate, sodium lauryl ether sulphate, sodium succinate, dodecylbenzenesulfonic acid or hydrolyzed protein and mixtures thereof.

Preferably, such foaming agents are used at concentrations of 1 to 6% by weight, more preferably 2 to 5% by weight, of the water used to form the pre-formed foam.

Preferably, the pre-formed foam has a bulk density in the range 30 - 100 g/L, preferably in the range 40 - 90 g/L.

In one embodiment, the pre-formed foam can be heated to 40°C to prevent air expansion as a result of combining the foam with the slurry, which could affect the stability of the cellular structure of the wet mineral foam.

Preferably, the pre-formed foam is mixed with the slurry in a pre-formed foam:slurry weight ratio in the range of 1:1 to 1:3, preferably in the range of 1:1.5 to 1:2.5.

The preparation of the slurry, the pre-formed foam and their mixing to form the mineral foam can be prepared with conventional devices and equipment, well known to a person skilled in the art.

The wet mineral foam can be poured into a containment cavity and hardened to obtain a cellular material. The containment cavity may be, for example, the cavity of a cavity wall or a mold (formwork) to form a building element.

Curing can be achieved at room temperature or at a higher temperature, e.g. up to 45°C.

The curing phase preferably lasts 24 hours to 92 hours, more preferably 48 hours to 72 hours. Depending on requirements, curing can be performed by a drying phase of the cellular material.

The cellular material can have any desired shape, e.g. slab or brick.

Preferably, the cellular material has a density of less than 500 kg/m³, more preferably less than 250 kg/m³. In a preferred embodiment, the density is in the range 60-200 kg/m³, even more preferably in the range 80-160 kg/m³.

The cellular material has a thermal conductivity (measured according to DIN EN 12667) of less than 1 mW/mK, more preferably in the range of 0.2 - 0.6 mW/mK.

The cellular material has a compressive strength (measured according to DIN EN 826) of at least 0.080 kPa, more preferably in the range of 0.100 - 0.300 kPa.

The cellular material according to the present invention can be used for various applications. In particular, it finds application in the building sector as a building element, thermal insulation element, sound absorption element or fire protection element.

The following example is provided purely for the purpose of illustration of the present invention and should not be regarded as a limitation of the scope of protection defined by the appended claims.

### Example

A mineral foam according to the present invention was prepared from a mixture of inorganic binders having the composition shown in Table 1.

**Table 1 - Mixture of inorganic binders**

| Component | % w/w |
|---|---|
| Metakaolin | 48 |
| Hydrated lime | 22 |
| Aluminous cement | 6.5 |
| Gypsum | 5 |
| Silica fume | 7.5 |
| Water-repellent additive¹ | 1 |
| Corn starch | 10 |
| Total | 100 |

| | |
|---|---|
| ¹SITREN 750 (Evonik) | |

The mixture of binders was added with 65 kg of Portland cement 52.5 (N) and then mixed with 35 liters of water, to which 3 kg/m³ of an aqueous colloidal silica solution (40% silica by weight) and 4 kg/m³ of superplasticizing additive had previously been added.

The pH of the mixture, after reaching a value of about 13, was adjusted by the addition of acetic acid to a value of 10.5.

A pre-formed foam with a density of approx. 55 kg/L was prepared by mixing water and a foaming agent (lauryl sulphate) and blowing air through a compressor.

The mixture and the pre-formed foam were mixed by means of an automatic mixing system to form a fluid mineral foam, which was poured into a mold.

The mineral foam was left to harden for 72 hours, after which a cellular material with the following characteristics was obtained:
- density of 100 kg/m³;
- thermal conductivity (DIN EN 12667) of 0.40 mW/mK;
- compressive strength (DIN EN 826) of 0.180 kPa.

## Claims

1. Method for preparing a mineral foam comprising the following sequential steps:
a. preparing a slurry comprising:
- a mixture of inorganic binders comprising: at least one reactive aluminosilicate binder, at least one hydraulic binder and at least one aerial binder;
- Portland cement;
- colloidal silica;
- water;
- optionally, at least one additive;
b. adjusting the pH of the slurry to a value within the range of 9 to 12.5;
c. combining the slurry with a pre-formed foam to obtain the mineral foam.

2. Method according to claim 1, wherein said at least one reactive aluminosilicate binder is selected from: calcined clay, fly ash, blast furnace slag and mixtures thereof.

3. Method according to claim 2, wherein said at least one reactive aluminosilicate binder is a calcined clay, preferably metakaolin.

4. Method according to any one of claims 1 to 3, wherein said at least one hydraulic binder is selected from: hydraulic lime, aluminous cement, sulfo-aluminous cement, silica fume, anhydrite and mixtures thereof.

5. Method according to any one of claims 1 to 4, wherein said at least one aerial binder is selected from: hydrated lime, gypsum and mixtures thereof.

6. Method according to any one of claims 1 to 5, wherein the mixture comprises:
a. 100 parts by weight of a mixture of inorganic binders comprising:
- 30-70% by weight of reactive aluminosilicate binder,
- 10-40% by weight of hydraulic binder,
- 10-50% by weight of aerial binder,
- optionally, one or more additives,
said percentages referring to the weight of the mixture of inorganic binders;
b. 30 to 75 parts by weight of Portland cement.

7. Method according to any one of claims 1 to 5, wherein the mixture comprises:
a. 100 parts by weight of a mixture of inorganic binders comprising:
- 30-70% by weight of calcined clay, preferably metakaolin, as reactive aluminosilicate binder,
- 10-40% by weight of at least one hydraulic binder selected from: aluminous cement, sulfo-aluminous cement, silica fume and mixtures thereof,
- 10-50% by weight of at least one aerial binder selected from: hydrated lime, gypsum and mixtures thereof,
- optionally, one or more additives,
said percentages referring to the weight of the mixture of inorganic binders;
b. 30 to 75 parts by weight of Portland cement.

8. Method according to any one of claims 1 to 7, wherein the pH of said slurry is adjusted by adding at least one acid, preferably an acid selected from: acetic acid, formic acid, oxalic acid and mixtures thereof.

9. Method according to any one of claims 1 to 8, wherein said mineral foam comprises reinforcing fibers, preferably fibers selected from: basalt fibers, cellulose fibers and mixtures thereof.

10. Method according to any one of claims 1 to 9, wherein said mineral foam comprises at least one coloring agent, preferably a metal oxide.

11. Mineral foam comprising:
- a mixture of inorganic binders comprising: at least one reactive aluminosilicate, at least one hydraulic binder and at least one aerial binder;
- Portland cement,
- colloidal silica;
- water;
- optionally, at least one additive;
- a pre-formed foam.

12. Mineral foam according to claim 11 comprising:
- a mixture of inorganic binders comprising:
(i) calcined clay, preferably metakaolin, as a reactive aluminosilicate binder;
(ii) at least one hydraulic binder selected from: aluminous cement, sulfo-aluminous cement, silica fume and mixtures thereof;
(iii) at least one aerial binder selected from: hydrated lime, gypsum and mixtures thereof;
- Portland cement,
- colloidal silica;
- water;
- optionally, at least one additive ;
- a pre-formed foam.

13. Cellular material obtained by curing mineral foam according to claim 11.

14. Use of the cellular material according to claim 13 as a thermally insulating material, sound absorbing material or building material.

## Patentansprüche

1. Verfahren zur Herstellung eines Mineralschaums, das die folgenden aufeinanderfolgenden Schritte umfasst:
a. Herstellen einer Aufschlämmung, umfassend:
- eine Mischung aus anorganischen Bindemitteln, umfassend: mindestens ein reaktives Alumosilikatbindemittel, mindestens ein hydraulisches Bindemittel und mindestens ein Luftbindemittel;
- Portlandzement;
- kolloidales Siliciumdioxid;
- Wasser;
- gegebenenfalls mindestens einen Zusatzstoff;
b. Einstellen des pH-Werts der Aufschlämmung auf einen Wert im Bereich von 9 bis 12,5;
c. Kombinieren der Aufschlämmung mit einem vorgeformten Schaum, um den Mineralschaum zu erhalten.

2. Verfahren nach Anspruch 1, wobei das mindestens eine reaktive Alumosilikatbindemittel ausgewählt ist aus: kalziniertem Ton, Flugasche, Hochofenschlacke und Mischungen davon.

3. Verfahren nach Anspruch 2, wobei das mindestens eine reaktive Alumosilikatbindemittel ein kalzinierter Ton, vorzugsweise Metakaolin, ist.

4. Verfahren nach einem der Ansprüche 1 bis 3, wobei das mindestens eine hydraulische Bindemittel ausgewählt ist aus: hydraulischem Kalk, Aluminatzement, Sulfoaluminatzement, Silikastaub, Anhydrit und Mischungen davon.

5. Verfahren nach einem der Ansprüche 1 bis 4, wobei das mindestens eine Luftbindemittel ausgewählt ist aus: Kalkhydrat, Gips und Mischungen davon.

6. Verfahren nach einem der Ansprüche 1 bis 5, wobei die Mischung Folgendes umfasst:
a. 100 Gewichtsteile einer Mischung aus anorganischen Bindemitteln, umfassend:
- 30-70 Gew.-% reaktives Alumosilikatbindemittel,
- 10-40 Gew.- % hydraulisches Bindemittel,
- 10-50 Gew.- % Luftbindemittel,
- gegebenenfalls einen oder mehrere Zusatzstoffe,
wobei sich die Prozentsätze auf das Gewicht der Mischung aus anorganischen Bindemitteln beziehen;
b. 30 bis 75 Gewichtsteile Portlandzement.

7. Verfahren nach einem der Ansprüche 1 bis 5, wobei die Mischung Folgendes umfasst:
a. 100 Gewichtsteile einer Mischung aus anorganischen Bindemitteln, umfassend:
- 30-70 Gew.-% kalzinierter Ton, vorzugsweise Metakaolin, als reaktives Alumosilikatbindemittel,
- 10-40 Gew.- % mindestens eines hydraulischen Bindemittels, ausgewählt aus: Aluminatzement, Sulfoaluminatzement, Silikastaub und Mischungen davon,
- 10-50 Gew.-% mindestens eines Luftbindemittels, ausgewählt aus: Kalkhydrat, Gips und Mischungen davon,
- gegebenenfalls einen oder mehrere Zusatzstoffe,
wobei sich die Prozentsätze auf das Gewicht der Mischung aus anorganischen Bindemitteln beziehen;
b. 30 bis 75 Gewichtsteile Portlandzement.

8. Verfahren nach einem der Ansprüche 1 bis 7, wobei der pH-Wert der Aufschlämmung durch Zugabe mindestens einer Säure, vorzugsweise einer Säure, ausgewählt aus: Essigsäure, Ameisensäure, Oxalsäure und deren Mischungen, eingestellt wird.

9. Verfahren nach einem der Ansprüche 1 bis 8, wobei der Mineralschaum Verstärkungsfasern, vorzugsweise Fasern, ausgewählt aus Basaltfasern, Zellulosefasern und deren Mischungen, umfasst.

10. Verfahren nach einem der Ansprüche 1 bis 9, wobei der Mineralschaum mindestens ein Färbemittel, vorzugsweise ein Metalloxid, umfasst.

11. Mineralschaum, umfassend:
- eine Mischung aus anorganischen Bindemitteln, umfassend: mindestens ein reaktives Alumosilikat, mindestens ein hydraulisches Bindemittel und mindestens ein Luftbindemittel;
- Portlandzement,
- kolloidales Siliciumdioxid;
- Wasser;
- gegebenenfalls mindestens einen Zusatzstoff;
- einen vorgeformten Schaumstoff.

12. Mineralschaum nach Anspruch 11, umfassend:
- eine Mischung aus anorganischen Bindemitteln, das Folgendes umfasst:
(i) kalzinierten Ton, vorzugsweise Metakaolin, als reaktives Alumosilikatbindemittel;
(ii) mindestens ein hydraulisches Bindemittel, ausgewählt aus: Aluminatzement, Sulfoaluminatzement, Silikastaub und Mischungen davon;
(iii) mindestens ein Luftbindemittel, ausgewählt aus: Kalkhydrat, Gips und Mischungen davon;
- Portlandzement,
- kolloidales Siliciumdioxid;
- Wasser;
- gegebenenfalls mindestens einen Zusatzstoff;
- einen vorgeformten Schaumstoff.

13. Zellmaterial, das durch Aushärten von Mineralschaum nach Anspruch 11 erhalten wird.

14. Verwendung des Zellmaterials nach Anspruch 13 als wärmeisolierendes Material, schallabsorbierendes Material oder Baumaterial.

## Revendications

1. Procédé de préparation d'une mousse minérale comprenant les étapes séquentielles suivantes :
a. la préparation d'une suspension comprenant :
- un mélange de liants inorganiques comprenant : au moins un liant aluminosilicate réactif, au moins un liant hydraulique et au moins un liant aérien ;
- du ciment Portland ;
- de la silice colloïdale ;
- de l'eau ;
- facultativement, au moins un additif ;
b. l'ajustement du pH de la suspension sur une valeur au sein de la plage de 9 à 12,5 ;
c. la combinaison de la suspension avec une mousse préformée pour obtenir la mousse minérale.

2. Procédé selon la revendication 1, dans lequel ledit au moins un liant aluminosilicate réactif est sélectionné parmi : l'argile calcinée, les cendres volantes, le laitier de haut fourneau et les mélanges de ceux-ci.

3. Procédé selon la revendication 2, dans lequel ledit au moins un liant aluminosilicate réactif est une argile calcinée, de préférence le métakaolin.

4. Procédé selon l'une quelconque des revendications 1 à 3, dans lequel ledit au moins un liant hydraulique est sélectionné parmi : la chaux hydraulique, le ciment alumineux, le ciment sulfo-alumineux, les fumées de silice, l'anhydrite et les mélanges de ceux-ci.

5. Procédé selon l'une quelconque des revendications 1 à 4, dans lequel ledit au moins un liant aérien est sélectionné parmi : la chaux hydratée, le gypse et les mélanges de ceux-ci.

6. Procédé selon l'une quelconque des revendications 1 à 5, dans lequel le mélange comprend :
a. 100 parties en poids d'un mélange de liants inorganiques comprenant :
- 30 à 70 % en poids de liant aluminosilicate réactif,
- 10 à 40 % en poids de liant hydraulique,
- 10 à 50 % en poids de liant aérien,
- facultativement, un ou plusieurs additifs,
lesdits pourcentages faisant référence au poids du mélange de liants inorganiques ;
b. 30 à 75 parties en poids de ciment Portland.

7. Procédé selon l'une quelconque des revendications 1 à 5, dans lequel le mélange comprend :
a. 100 parties en poids d'un mélange de liants inorganiques comprenant :
- 30 à 70 % en poids d'argile calcinée, de préférence de métakaolin, comme liant aluminosilicate réactif,
- 10 à 40 % en poids d'au moins un liant hydraulique sélectionné parmi : le ciment alumineux, le ciment sulfo-alumineux, les fumées de silice et les mélanges de ceux-ci,
- 10 à 50 % en poids d'au moins un liant aérien sélectionné parmi : la chaux hydratée, le gypse et les mélanges de ceux-ci,
- facultativement, un ou plusieurs additifs,
lesdits pourcentages faisant référence au poids du mélange de liants inorganiques ;
b. 30 à 75 parties en poids de ciment Portland.

8. Procédé selon l'une quelconque des revendications 1 à 7, dans lequel le pH de ladite suspension est ajusté par l'ajout d'au moins un acide, de préférence d'un acide sélectionné parmi : l'acide acétique, l'acide formique, l'acide oxalique et les mélanges de ceux-ci.

9. Procédé selon l'une quelconque des revendications 1 à 8, dans lequel ladite mousse minérale comprend des fibres de renforcement, de préférence des fibres sélectionnées parmi : les fibres de basalte, les fibres de cellulose et les mélanges de celles-ci.

10. Procédé selon l'une quelconque des revendications 1 à 9, dans lequel ladite mousse minérale comprend au moins un agent colorant, de préférence un oxyde métallique.

11. Mousse minérale comprenant :
- un mélange de liants inorganiques comprenant : au moins un aluminosilicate réactif, au moins un liant hydraulique et au moins un liant aérien ;
- du ciment Portland,
- de la silice colloïdale ;
- de l'eau ;
- facultativement, au moins un additif ;
- une mousse préformée.

12. Mousse minérale selon la revendication 11 comprenant :
- un mélange de liants inorganiques comprenant :
(i) de l'argile calcinée, de préférence du métakaolin, comme liant aluminosilicate réactif ;
(ii) au moins un liant hydraulique sélectionné parmi : le ciment alumineux, le ciment sulfo-alumineux, les fumées de silice et les mélanges de ceux-ci ;
(iii) au moins un liant aérien sélectionné parmi : la chaux hydratée, le gypse et les mélanges de ceux-ci ;
- du ciment Portland,
- de la silice colloïdale ;
- de l'eau ;
- facultativement, au moins un additif ;
- une mousse préformée.

13. Matériau cellulaire obtenu par le durcissement d'une mousse minérale selon la revendication 11.

14. Utilisation du matériau cellulaire selon la revendication 13 comme matériau d'isolation thermique, matériau d'absorption acoustique ou matériau de construction.
